# EUROPEAN PATENT SPECIFICATION

(11) **EP 4 549 315 B1**
(45) Date of publication and mention of the grant of the patent: **11.02.2026**
(21) Application number: 23306911.1
(22) Date of filing: 06.11.2023
(51) Int. Cl.: B64C 13/34, B64C 13/50

(54) **FAULT TOLERANT ROTARY EMA**
FEHLERTOLERANTE ROTIERENDE EMA
EMA ROTATIF INSENSIBLE AUX DÉFAILLANCES

(43) Date of publication of application: 07.05.2025
(73) Proprietor: Goodrich Actuation Systems SAS, 27950 Saint-Marcel (FR)
(72) Inventor: POTIER, Karl, 75014 Paris (FR); MEDINA, Raphael, 93380 Pierrefitte sur Seine (FR)
(74) Representative: Casalonga

(56) References cited:
- EP-A1- 2 727 831
- EP-A1- 4 063 263
- US-A- 5 214 972

## Description

### TECHNICAL FIELD

The present invention relates to an electromechanical actuator, EMA, such as for positioning moveable surfaces such as spoilers, wing flaps, etc. in aircraft and, in particular, a rotary EMA.

### BACKGROUND

Actuators find many applications, particularly in controlling movement of a moveable component. In aircraft, many moveable components and surfaces are moved by means of an actuator.

Conventionally, many actuators, particularly in vehicles, aircraft, heavy machinery etc. are hydraulic actuators where components are moved in response to hydraulic or pressurized fluid. In general terms, a hydraulic actuator comprises a cylindrical housing in which is mounted an axially moveable piston rod. A free end of the piston rod that extends out of the housing is attached to a component or surface to be moved. Hydraulic fluid is provided to the actuator, from a hydraulic fluid supply in fluid communication with the interior of the actuator housing via the ports in the housing, to cause the piston rod to extend out of the housing, or hydraulic fluid is withdrawn from the housing to cause the piston rod to retract back into the housing. The movement of the piston rod is determined by the direction of, and pressure of the fluid applied to the actuator, which is in response to a control signal. As the piston rod moves relative to the housing, the moveable component or surface to which it is attached will move accordingly. To allow both extension of the rod and retraction of the rod, a valve is provided to set the movement to extension or retraction. This may be a servovalve, more specifically an electrohydraulic servovalve (EHSV).

Whilst hydraulic actuators have proven reliable and effective particularly in large load applications, the hydraulic parts of the system add considerably to the overall weight and size of the system. Also, hydraulic systems are subject to leakage and are not particularly clean.

There has, in recent years, been a move to replace hydraulic systems, in many fields, such as in aviation, with electrical or partly electrical systems which have reduced weight and footprint compared to hydraulic systems. With the move towards 'more electric aircraft' (MEE) or 'all electric aircraft' (AEE), for example, there has been a move towards using electromechanical actuators (EMA) to control the movement of movable surfaces and components.

In general, EMAs include an electric motor having an outlet shaft with first and second directions of rotation and a transmission assembly arranged to connect the shaft to the moveable surface.

A rotary EMA has a rotary shaft, driven by a motor, and connected to rotate an output ring via a gear set. The output ring is attached to the surface to be moved, to cause a corresponding rotary movement of the surface about the axis of the output ring. Rotary EMAs have proven useful in e.g. aircraft flight control panels, where the EMA can be mounted along or in the panel hinge. Usually, two actuators are provided per surface, for redundancy, which also adds to the overall weight, size and cost of the actuator.

In the prior art a rotary electromechanical actuator EMA and an aircraft using the same is known from EP 4 063 263 A1.

A problem with EMAs, however, is that they can be prone to jamming more so than hydraulic actuators. This means that EMAs are typically not considered suitable for safety critical surfaces such as primary flight control surfaces (ailerons, elevators, rudders, spoiler etc.) in aircraft. The consequences of faulty operation due to jamming, for such surfaces, are too dangerous. EMAs are, therefore, typically only used to move less critical, e.g. secondary flight control, surfaces where jamming is manageable.

There is a desire to be able to use the lighter, cleaner more efficient EMAs in place of hydraulic actuators in more applications and so there is a desire to devise EMA structures that are still capable of safe and reliable operation even in the event of jamming.

### SUMMARY

According to the invention, there is provided a jam-tolerant, duplex EMA architecture which includes an output gearbox that allows output control even in the event of partial jamming. More specifically, there is provided a rotary electromechanical actuator, EMA, comprising: a first EMA part comprising a first electric motor and a first rotary shaft extending along an axis and arranged to be rotated about the axis by the first electric motor, and a first 1st stage gearbox providing a geared transmission from the first electric motor to the first output shaft, and a first brake assembly for applying a braking force to the first output shaft; the EMA further comprising: a second EMA part comprising a second electric motor and a second rotary shaft extending along the axis and arranged to be rotated about the axis by the second electric motor, and a second 1st stage gearbox providing a geared transmission from the second electric motor to the second output shaft, and a second brake assembly for applying a braking force to the second output shaft; and the EMA further comprising an output arranged to rotate with rotation of the first shaft and the second shaft; the EMA further comprising a common stage gearbox providing a geared transmission between the first and second shafts and the output, the common stage gearbox being located between the first and second 1st stage gearboxes; wherein the common stage gearbox comprises: a first sun gear in engagement with and driven by the first shaft and a second sun gear in engagement with and driven by the second shaft; a first intermediate gear driven by the first sun gear; a second intermediate gear driven by the second sun gear; and an outer gear structure arranged to engage with the first and the second intermediate gears; wherein the outer gear structure comprises: a first outer gear part that extends across and engages both the first intermediate gear and the second intermediate gear; and a second outer gear part that meshes with the first intermediate gear and is engaged with and drives the output.

### BRIEF DESCRIPTION

Examples of the EMA assembly according to the invention will now be described with reference to the drawings. It should be noted that these are examples only and variations are possible within the scope of the claims.
Figure 1 is a block representation of an EMA architecture according to the invention.
Figure 2 shows an example of bearings that can be used in the EMA architecture of the invention.
Figure 3 shows the architecture of Figure 1 in normal operation.
Figure 4 shows the architecture of Figure 1 if one of the EMA parts is not active.
Figure 5 shows the architecture of Figure 1 if the other EMA part is not active.
Figure 6 shows the architecture of Figure 1 if one EMA part is jammed.
Figure 7 shows the architecture of Figure 1 if the other EMA part is jammed.
Figure 8 shows the architecture of Figure 1 if the first sun and intermediate gear of the common second stage gearbox is jammed.
Figure 9 shows the architecture of Figure 1 in the event of a jam of the outer gear structure of the common second stage gearbox.

### DETAILED DESCRIPTION

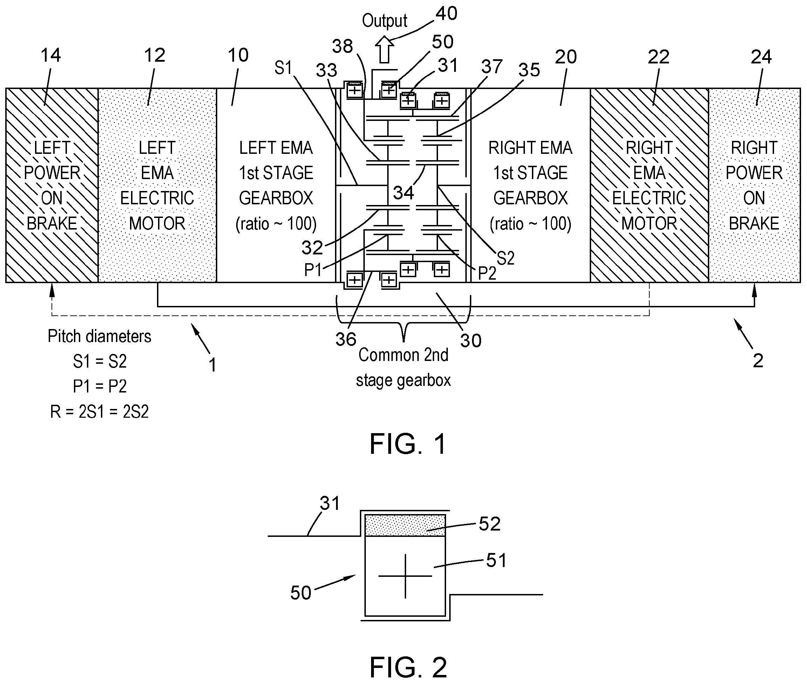

With reference, first, to Fig. 1, the EMA assembly includes a first EMA part 1 comprising first first stage gearbox 10, a first electric motor 12 in driving connection with the first first stage gearbox 10, and a first brake assembly 14 in connection with the first electric motor. The first electric motor 12 is arranged to drive a first output shaft S1 via the first first stage gearbox 10. The gear ratio of the first first stage gearbox may be in the region of e.g. 1:100. The first brake assembly 14 is configured to apply a braking force to the first electric motor when actuated.

The EMA assembly also includes a second EMA part 2 of the same design as the first EMA part, i.e. comprising a second first stage gearbox 20, a second electric motor 22 in driving connection with the second first stage gearbox 20, and a second brake assembly 24 in connection with the second electric motor. The second electric motor 22 is arranged to drive a second output shaft S2 via the second first stage gearbox 20. The gear ratio of the second first stage gearbox may be in the region of e.g. 1:100. The second brake assembly 24 is configured to apply a braking force to the second electric motor when actuated.

The first EMA part 1 and the second EMA part 2 are arranged as essentially mirror images of each other about a common second stage gearbox 30. The common second stage gearbox 30 comprises a first sun gear 32 in engagement with and driven by the first shaft S1 and a second sun gear 34 in engagement with and driven by the second shaft S2. The first sun gear 32 drives a first intermediate gear 33 of the common second stage gearbox and the second sun gear 34 drives a second intermediate gear 35 of the common second stage gearbox. An outer gear structure 36 of the common second stage gearbox engages the first and the second intermediate gear as will be described further below to provide a fault tolerant driving of a common output 40 even in the event that one of the sides of the EMA jams. In one example, the pitch diameter of the outer gear structure 36 is twice that of each of the shafts S1, S2; the two shafts S1 and S2 have the same pitch diameter and the two intermediate gears have the same pitch diameter. Other pitch ratios are, however, possible.

The purpose of the brake assemblies is to hold the gearbox shaft of one side in the event of failure of an actuator on the other side. Without the brakes, if one actuator were to fail, the shaft would rotate freely and so the EMA would not drive the surface. The common second stage gearbox 30 is arranged in a housing 31 and the outer gear structure rotates relative to the housing, via bearings 50, causing rotation of the output 40.

The outer gear structure 36 comprises a first outer gear part 37 that extends across and engages both the first intermediate gear and the second intermediate gear. Bearings are provided between this first outer gear part and the gear housing 31. The outer gear structure also comprises a second outer gear part 38 that meshes with the first intermediate gear 33 and is attached to, and drives the output 40. Bearings are also provided between the second outer gear part and the housing 31.

The arrangement of the outer gear structure and the common second stage gearbox has two inputs and one output that is driven even if there is a jam in part of the duplex EMA architecture, regardless of the jam location. This will be described further below with reference to Figs. 2 to 10.

One location where jamming may occur is at the bearings 50. In one example of the architecture of this invention, the bearings may be designed such that even in the event of a bearing jamming, rotation of the output 40 by the EMA is possible. This may be provided by the bearings shown in Fig. 2. Here, each bearing comprises a ball bearing 51 and a bushing 52, the bushing located between the ball bearing and the output 40. In normal operation, the gear (e.g. 37) rotates relative to the gear housing 31 due to the rotation of the ball bearing 51. If the ball bearing jams, the gear can still rotate thanks to the bushing 52, as the friction of the jammed ball bearing is greater than that of the bushing. The rotation in this situation will be more lossy, but will ensure the required rotation of the output. The bushings may be made of e.g. copper.

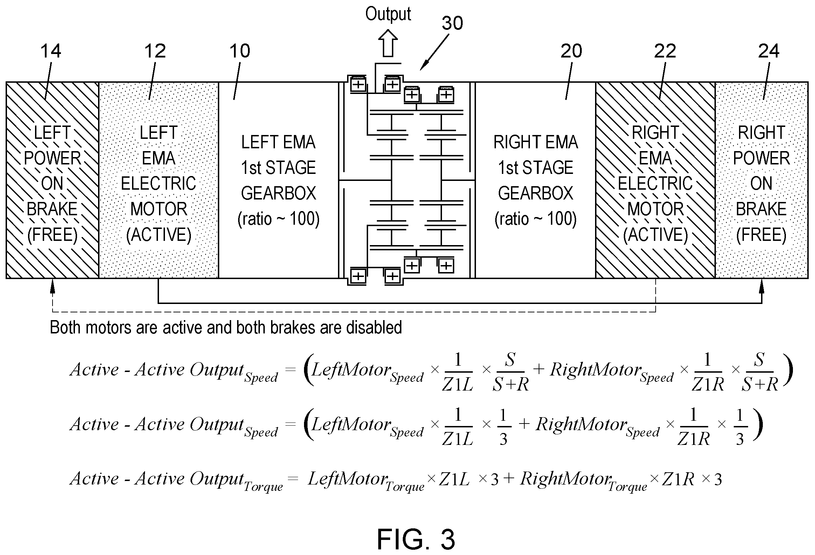

Other locations in the system where jamming may occur will be describe below. Fig. 3, however, will be described first, briefly. Fig. 3 shows the situation when all of the EMA parts are operating normally (so-called 'active-active' mode). The first and the second electric motors are active and both the first and the second brake assemblies are disabled, allowing the motors to run. In this situation, the first motor drives the first shaft S1 due to rotation of the first motor, and the second motor drives the second shaft S2. Rotation of the shafts cause rotation of the first and second sun gears and the first and second intermediate gears which cause rotation of the outer gear structure parts. Rotation of the second outer gear part causes corresponding rotation of the output 40. The output speed is the speed of both motors stepped according to the ratio of the first stage gearboxes and the pitch diameters of the shafts and the outer gear and is effectively 100% of the speed capability of the EMA. The output torque is also the sum of the torque of both motors weighted by the gear ratio and pitch diameters and is 100% of the available torque. Here, we are using '100%' only for comparison with failed or jammed configurations, which would be less than 100%. The '100%' should not be understood purely literally, but to mean 'substantially all'.

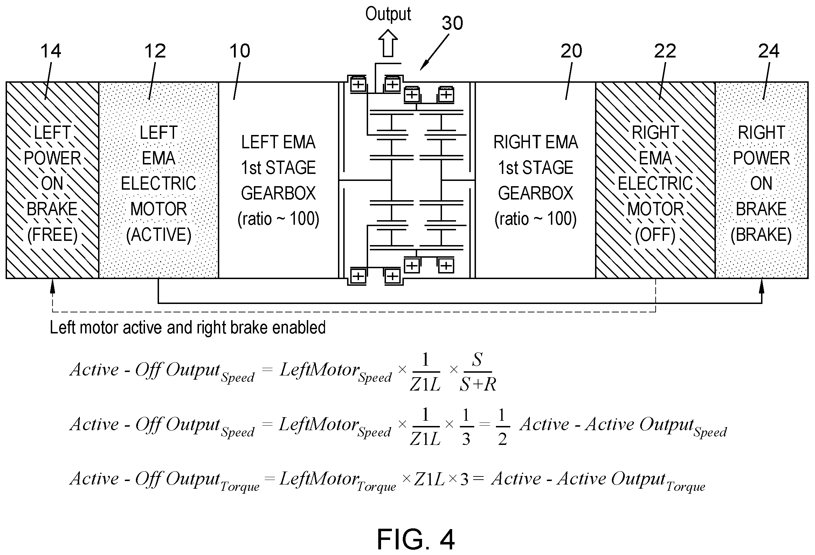

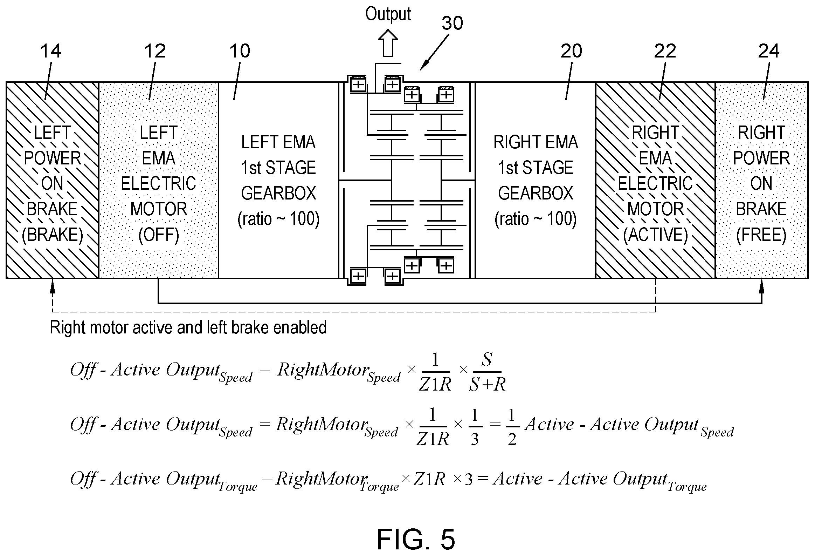

In the event that one of the motors is off (and the respective brake is enabled to prevent free rotation of the shaft), the respective shaft (S2 in Fig. 4 where the second motor is braked; S1 in Fig. 5 where the first motor is braked) is not rotating. If the second shaft S2 is not rotating, as in Fig. 4, the first shaft S1 is rotating, which rotates the first sun gear 32, the first intermediate gear 33 and the second part 38 of the outer gear structure, which therefore rotates the output 40, despite the other parts of the second stage gearbox not running. If the first shaft S1 is not rotating, as in Fig. 5, the second shaft S2 is rotating, which rotates the second sun gear 34 and the second intermediate gear and the first part 37 of the outer gear structure. As this engages with the first intermediate gear 33 and causes it to rotate, the second part 38 of the outer gear structure rotates thus rotating the output. Thus, if either one of the motors is off, the output 40 will still rotate, albeit at half of the speed of normal operation.

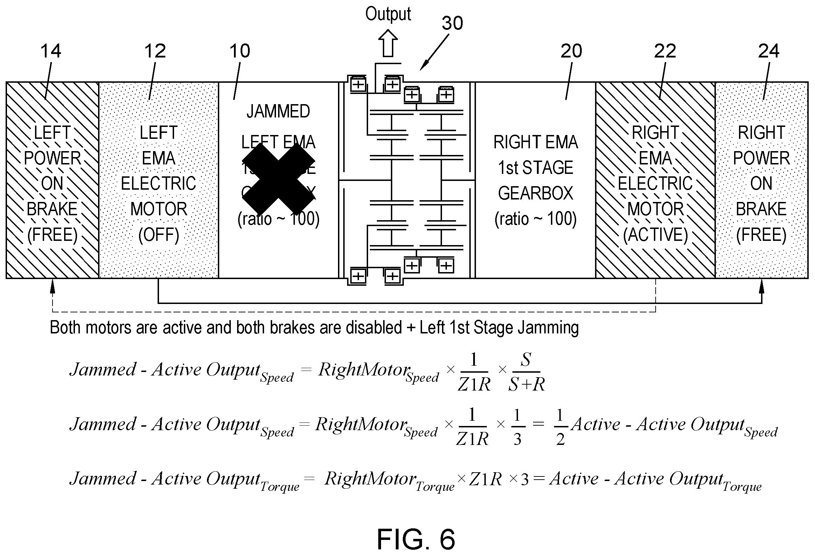

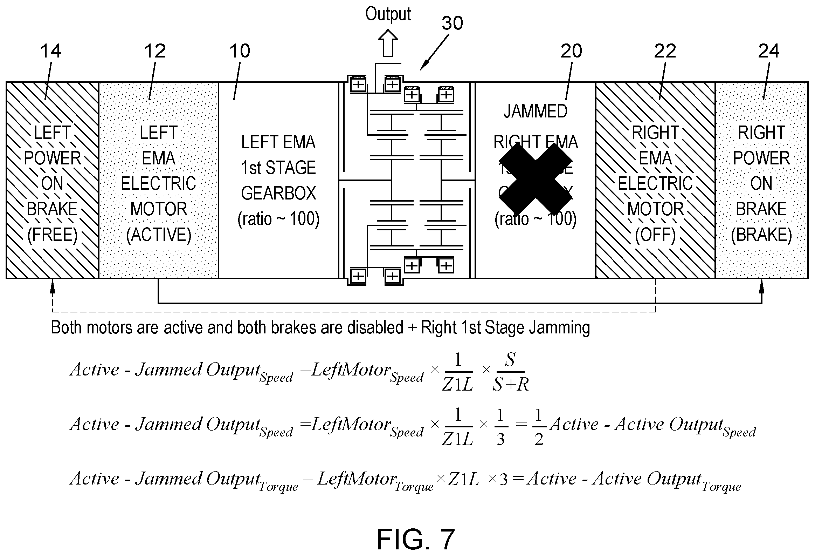

Another point of jamming is in the first gear stage. Both motors 12, 22 may be active, but there may be a jam in one or other of the first gear stages 10, 20. Figure 6 represents a jam in the first first gear stage 10. Figure 7 represents when the second first gear stage 20 is jammed. The operation of the common second gear stage is similar to the operation described above for Figs. 4 and 5. If the first first gear stage is jammed, the first shaft S1 does not rotate. If the second first gear stage is jammed, the second shaft S2 will not rotate. Nevertheless, as described above, the output 40 will still be caused to rotate, albeit at 50% full speed.

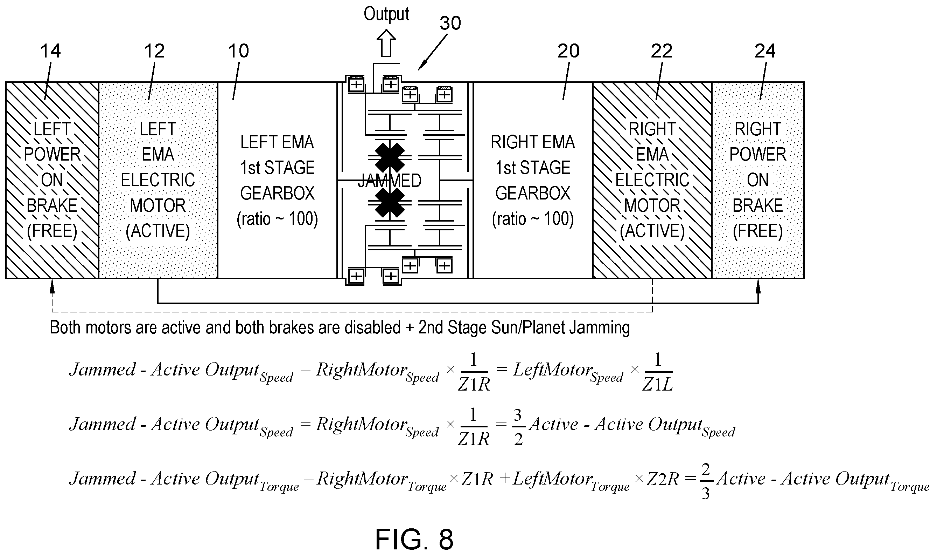

Another jam situation that may arise is depicted in Fig. 8, where there is a jam between a sun gear and an intermediate gear of the common second stage gearbox 30, despite both motors and first stage gearboxes being active. If, as shown in Fig. 8, the first sun gear 32 and first intermediate gear 33 are jammed, and so the second stage gearbox is fully jammed and acts as a rigid body, and rotation of the first shaft S1 will not translate to rotation of the second part 38 of the outer gear structure and the output, but rotation of the second shaft will cause rotation of the first part of the outer gear structure which, in turn, will rotate the first intermediate gear and the second part of the outer gear structure, causing rotation of the output. The speed of rotation here will be 150% of the normal operation speed, but at lower torque, because the output speed will be directly equal to the speeds of the first and second shafts, which should be the same, and the output torque is the sum of the torques of the first and second shafts.

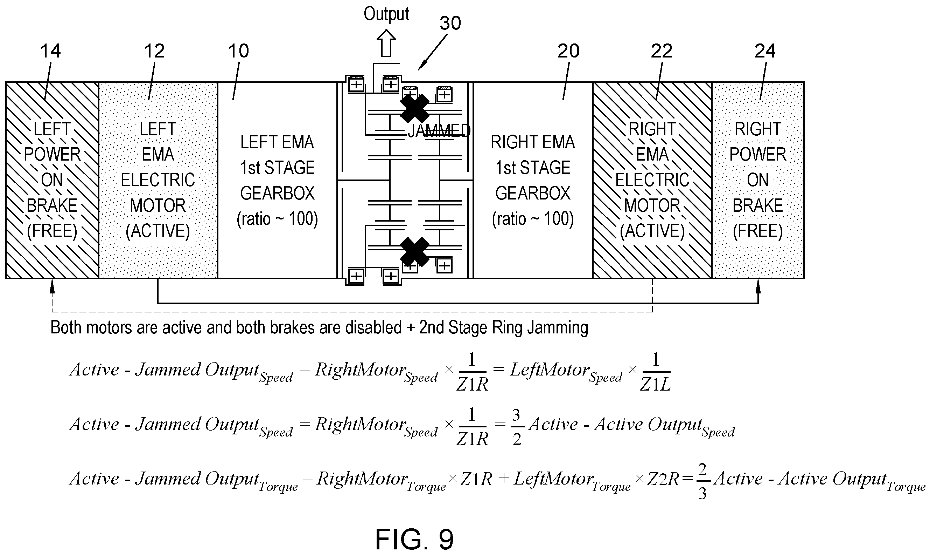

Figure 9 shows the situation where the first part 37 of the outer gear structure is jammed and the second stage gearbox is, again, jammed and acts as a rigid body. Here, rotation of the first shaft S1 will translation to rotation of the second part 38 of the outer gear structure and, therefore, the output, at higher than normal speed, but lower torque.

Another benefit of this arrangement is that, because the different jam locations result in different output speed and torque, it is possible to analyse where the jam is based on the speed/torque.

## Claims

1. A rotary electromechanical actuator, EMA, comprising:
a first EMA part (1) comprising a first electric motor (12) and a first rotary shaft (S1) extending along an axis and rotating about the axis by the first electric motor (12), and a first 1st stage gearbox (10) providing a geared transmission from the first electric motor (12) to the first rotary shaft (S1),
and a first brake assembly (14) for applying a braking force to the first rotary shaft (S1); the EMA further comprising:
a second EMA part (2) comprising a second electric motor (22) and a second rotary shaft (S2) extending along the axis and rotating about the axis by the second electric motor (22), and a second 1st stage gearbox (20) providing a geared transmission from the second electric motor (22) to the second rotary shaft (S2), and a second brake assembly (24) for applying a braking force to the second rotary shaft (S2); and the EMA further comprising an output (40) rotating with rotation of the first rotary shaft (S1) and the second shaft (S2); the EMA further comprising a common stage gearbox (30) providing a geared transmission between the first rotary shaft (S1) and second rotary shaft (S2) and the output (40), the common stage gearbox (30) being located between the first 1 st stage gearbox (10) and the second 1^{st} stage gearbox (20); **characterized in**
**that** the common stage gearbox (30) comprises:
a first sun gear (32) in engagement with and driven by the first rotary shaft (S1) and a second sun gear (34) in engagement with and driven by the second rotary shaft (S2);
a first intermediate gear (33) driven by the first sun gear (32);
a second intermediate gear (35) driven by the second sun gear (34); and
an outer gear structure (36) engaging with the first intermediate gear (33) and the second intermediate gear (35);
wherein the outer gear structure (36) comprises:
a first outer gear part (37) that extends across and engages both the first intermediate gear (33) and the second intermediate gear (35);
and
a second outer gear part (38) that meshes with the first intermediate gear (33) and is engaged with and drives the output (40).

2. The EMA of claim 1, where an electrical connection is provided between the first electric motor (12) and the second brake assembly (24) and between the second electric motor (22) and the first brake assembly (14).

3. The EMA of claim 1 or 2, wherein a gear ratio of the first 1st stage gearbox (10) and the second 1^{st} stage gearbox (20) is 1:100.

4. The EMA of any preceding claim, wherein the first rotary shaft (S1) has a pitch diameter equal to that of the second rotary shaft (S2).

5. The EMA of claim 4, wherein the outer gear structure (36) has a pitch diameter approximately twice that of each of the first rotary shaft (S1) and the second rotary shaft (S2).

6. The EMA of any preceding claim wherein the first intermediate gear (33) has a pitch diameter equal to that of the second intermediate gear (35).

7. The EMA of any preceding claim, wherein the common stage gearbox (30) is arranged in a housing (31) and wherein the outer gear structure (36) rotates relative to the housing (31) to cause rotation of the output (40).

8. The EMA of claim 7, further comprising bearings (50) between the outer gear structure (36) and the housing (31).

9. The EMA of claim 8 comprising bearinas between the first outer gear part (37) and the housing (31) and between the second outer gear part (38) and the housing (31).

10. The EMA of claim 8 or 9, wherein each bearing (50) comprises a ball bearing (51) and a bushing (52), the bushing (52) located between the ball bearing (51) and the output (40).

11. Aircraft comprising an EMA according to any preceding claim and a control surface connected to the output (40) of the EMA, said EMA being arranged to move the control surface through said output (40).

## Patentansprüche

1. Elektromechanischer Drehantrieb, EMA, umfassend:
ein erstes EMA-Teil (1), das einen ersten Elektromotor (12) und eine erste Drehwelle (S1), die sich entlang einer Achse erstreckt und sich durch den ersten Elektromotor (12) um die Achse dreht, und ein erstes Getriebe der ersten Stufe (10), das ein Zahnradgetriebe von dem ersten Elektromotor (12) zu der ersten Drehwelle (S1) bereitstellt, und eine erste Bremsbaugruppe (14) zum Ausüben einer Bremskraft auf die erste Drehwelle (S1) umfasst; wobei der EMA ferner Folgendes umfasst:
ein zweites EMA-Teil (2), das einen zweiten Elektromotor (22) und eine zweite Drehwelle (S2), die sich entlang der Achse erstreckt und sich durch den zweiten Elektromotor (22) um die Achse dreht, und ein zweites Getriebe der ersten Stufe (20), das ein Zahnradgetriebe von dem zweiten Elektromotor (22) zur zweiten Drehwelle (S2) bereitstellt, und eine zweite Bremsbaugruppe (24) zum Ausüben einer Bremskraft auf die zweite Drehwelle (S2) umfasst; und wobei der EMA ferner einen Abtrieb (40) umfasst, der sich mit der Drehung der ersten Drehwelle (S1) und der zweiten Welle (S2) dreht; wobei der EMA ferner ein gemeinsames Stufengetriebe (30) umfasst, das ein Zahnradgetriebe zwischen der ersten Drehwelle (S1) und der zweiten Drehwelle (S2) und dem Abtrieb (40) bereitstellt, wobei das gemeinsame Stufengetriebe (30) zwischen dem ersten Getriebe der ersten Stufe (10) und dem zweiten Getriebe der ersten Stufe (20) angeordnet ist;
**dadurch gekennzeichnet, dass** das gemeinsame Stufengetriebe (30) Folgendes umfasst:
ein erstes Sonnenrad (32), das in Eingriff mit der ersten Drehwelle (S1) steht und von dieser angetrieben wird, und ein zweites Sonnenrad (34), das in Eingriff mit der zweiten Drehwelle (S2) steht und von dieser angetrieben wird;
ein erstes Zwischenrad (33), das von dem ersten Sonnenrad (32) angetrieben wird;
ein zweites Zwischenrad (35), das von dem zweiten Sonnenrad (34) angetrieben wird; und
eine äußere Zahnradstruktur (36), die mit dem ersten Zwischenrad (33) und dem zweiten Zwischenrad (35) in Eingriff steht; wobei die äußere Zahnradstruktur (36) Folgendes umfasst:
ein erstes äußeres Zahnradteil (37), das sich über das erste Zwischenrad (33) und das zweite Zwischenrad (35) erstreckt und mit beiden in Eingriff steht; und
ein zweites äußeres Zahnradteil (38), das mit dem ersten Zwischenrad (33) kämmt und mit dem Abtrieb (40) in Eingriff steht und diesen antreibt.

2. EMA nach Anspruch 1, wobei eine elektrische Verbindung zwischen dem ersten Elektromotor (12) und der zweiten Bremsbaugruppe (24) und zwischen dem zweiten Elektromotor (22) und der ersten Bremsbaugruppe (14) vorgesehen ist.

3. EMA nach Anspruch 1 oder 2, wobei ein Übersetzungsverhältnis des ersten Getriebes der ersten Stufe (10) und des zweiten Getriebes der ersten Stufe (20) 1:100 beträgt.

4. EMA nach einem der vorhergehenden Ansprüche, wobei die erste Drehwelle (S1) einen Teilkreisdurchmesser aufweist, der gleich dem der zweiten Drehwelle (S2) ist.

5. EMA nach Anspruch 4, wobei die äußere Zahnradstruktur (36) einen Teilkreisdurchmesser aufweist, der ungefähr doppelt so groß ist wie der der ersten Drehwelle (S1) und der zweiten Drehwelle (S2).

6. EMA nach einem der vorhergehenden Ansprüche, wobei das erste Zwischenrad (33) einen Teilkreisdurchmesser aufweist, der gleich dem des zweiten Zwischenrads (35) ist.

7. EMA nach einem der vorhergehenden Ansprüche, wobei das gemeinsame Stufengetriebe (30) in einem Gehäuse (31) angeordnet ist und wobei die äußere Zahnradstruktur (36) sich relativ zu dem Gehäuse (31) dreht, um eine Drehung des Abtriebs (40) zu erzeugen.

8. EMA nach Anspruch 7, der ferner Lager (50) zwischen der äußeren Zahnradstruktur (36) und dem Gehäuse (31) umfasst.

9. EMA nach Anspruch 8, der Lager zwischen dem ersten äußeren Zahnradteil (37) und dem Gehäuse (31) und zwischen dem zweiten äußeren Zahnradteil (38) und dem Gehäuse (31) umfasst.

10. EMA nach Anspruch 8 oder 9, wobei jedes Lager (50) ein Kugellager (51) und eine Buchse (52) umfasst, wobei sich die Buchse (52) zwischen dem Kugellager (51) und dem Abtrieb (40) befindet.

11. Luftfahrzeug, das einen EMA nach einem der vorhergehenden Ansprüche und eine Steuerfläche umfasst, die mit dem Abtrieb (40) der EMA verbunden ist, wobei der EMA so angeordnet ist, dass er die Steuerfläche über den Abtrieb (40) bewegt.

## Revendications

1. Actionneur électromécanique rotatif, EMA, comprenant :
une première partie d'EMA (1) comprenant un premier moteur électrique (12) et un premier arbre rotatif (S1) s'étendant le long d'un axe et tournant autour de l'axe à l'aide du premier moteur électrique (12), et une première boîte de vitesses de 1er étage (10) fournissant une transmission à engrenages allant du premier moteur électrique (12) au premier arbre rotatif (S1), et un premier ensemble de frein (14) pour appliquer une force de freinage au premier arbre rotatif (S1) ; l'EMA comprenant en outre :
une seconde partie d'EMA (2) comprenant un second moteur électrique (22) et un second arbre rotatif (S2) s'étendant le long de l'axe et tournant autour de l'axe à l'aide du second moteur électrique (22), et une seconde boîte de vitesses de 1er étage (20) fournissant une transmission à engrenages allant du second moteur électrique (22) au second arbre rotatif (S2), et un second ensemble de frein (24) pour appliquer une force de freinage au second arbre rotatif (S2) ; et l'EMA comprenant en outre une sortie (40) tournant avec une rotation du premier arbre rotatif (S1) et du second arbre (S2) ; l'EMA comprenant en outre une boîte de vitesses d'étage commun (30) fournissant une transmission à engrenages entre le premier arbre rotatif (S1) et le second arbre rotatif (S2) et la sortie (40), la boîte de vitesses d'étage commun (30) étant située entre la première boîte de vitesses de 1er étage (10) et la seconde boîte de vitesses de 1^{er} étage (20) ;
**caractérisé en ce que** la boîte de vitesses d'étage commun (30) comprend :
un premier engrenage solaire (32) en prise avec le premier arbre rotatif (S1), et entraîné par celui-ci, et un second engrenage solaire (34) en prise avec le second arbre rotatif (S2), et entraîné par celui-ci ;
un premier engrenage intermédiaire (33) entraîné par le premier engrenage solaire (32) ;
un second engrenage intermédiaire (35) entraîné par le second engrenage solaire (34) ; et
une structure d'engrenage externe (36) venant en prise avec le premier engrenage intermédiaire (33) et le second engrenage intermédiaire (35) ; dans lequel la structure d'engrenage externe (36) comprend :
une première partie d'engrenage externe (37) qui s'étend transversalement à la fois au premier engrenage intermédiaire (33) et au second engrenage intermédiaire (35), et vient en prise avec ceux-ci ; et
une seconde partie d'engrenage externe (38) qui s'engrène avec le premier engrenage intermédiaire (33) et est en prise avec la sortie (40) et entraîne celle-ci.

2. EMA selon la revendication 1, dans lequel une connexion électrique est établie entre le premier moteur électrique (12) et le second ensemble de frein (24) et entre le second moteur électrique (22) et le premier ensemble de frein (14) .

3. EMA selon la revendication 1 ou 2, dans lequel un rapport d'engrenage de la première boîte de vitesses de 1er étage (10) et de la seconde boîte de vitesses de 1^{er} étage (20) est de 1:100.

4. EMA selon une quelconque revendication précédente, dans lequel le premier arbre rotatif (S1) a un diamètre de pas égal à celui du second arbre rotatif (S2).

5. EMA selon la revendication 4, dans lequel la structure d'engrenage externe (36) a un diamètre de pas approximativement deux fois supérieur à celui de chacun du premier arbre rotatif (S1) et du second arbre rotatif (S2).

6. EMA selon une quelconque revendication précédente, dans lequel le premier engrenage intermédiaire (33) a un diamètre de pas égal à celui du second engrenage intermédiaire (35).

7. EMA selon une quelconque revendication précédente, dans lequel la boîte de vitesses d'étage commun (30) est agencée dans un boîtier (31) et dans lequel la structure d'engrenage externe (36) tourne par rapport au boîtier (31) pour provoquer la rotation de la sortie (40).

8. EMA selon la revendication 7, comprenant en outre des roulements (50) entre la structure d'engrenage externe (36) et le boîtier (31).

9. EMA selon la revendication 8 comprenant des roulements entre la première partie d'engrenage externe (37) et le boîtier (31) et entre la seconde partie d'engrenage externe (38) et le boîtier (31).

10. EMA selon la revendication 8 ou 9, dans lequel chaque roulement (50) comprend un roulement à billes (51) et une douille (52), la douille (52) étant située entre le roulement à billes (51) et la sortie (40).

11. Aéronef comprenant un EMA selon une quelconque revendication précédente et une surface de commande reliée à la sortie (40) de l'EMA, ledit EMA étant agencé pour déplacer la surface de commande par l'intermédiaire de ladite sortie (40).
